# EUROPEAN PATENT SPECIFICATION

(11) **EP 3 266 025 B1**
(45) Date of publication and mention of the grant of the patent: **09.10.2019**
(21) Application number: 16759270.8
(22) Date of filing: 23.02.2016
(51) Int. Cl.: G21C 9/033, G21C 15/18

(54) **MOBILE BORATION SYSTEM**
MOBILES BORIERUNGSSYSTEM
SYSTÈME DE BORICATION MOBILE

(30) Priority: 05.03.2015 US 201514639288
(43) Date of publication of application: 10.01.2018
(73) Proprietor: Westinghouse Electric Company LLC, Cranberry Township, PA 16066 (US)
(72) Inventor: SWANTNER, Stephen R., Pittsburgh, Pennsylvania 15239 (US); VANSTON, Ryan T., Pittsburgh, Pennsylvania 15203 (US); FOURNIER, Robert S., West Hartford, Connecticut 06119 (US)
(74) Representative: Gallo, Wolfgang
(86) International application number: PCT/US2016/019038
(87) International publication number: WO 2016/140831

(56) References cited:
- DE-A1-102011 111 772
- JP-A- 2008 249 348
- JP-A- 2011 052 970
- US-A- 5 327 703
- US-A1- 2013 121 454
- US-A1- 2013 170 599
- US-A1- 2013 170 599
- US-A1- 2014 069 515

## Description

### CROSS REFERENCE TO RELATED APPLICATION

This application claims priority to U.S. Traditional Patent Application Serial No. 13/792,465, filed March 11, 2013 entitled "Mobile Boration System."

### BACKGROUND

### 1. Field

This invention relates to supplying borated water to commercial nuclear power plants.

### 2. Description of Related Art

Commercial nuclear power plant operators are exploring solutions to eliminate and/or mitigate damages caused by natural and/or man-made disasters, such as the tsunami that recently damaged the Fukushima nuclear power plant in Japan, including not only the reactors but many other supply systems permanently built on-site, with a substantial footprint. One system that is being examined is the water supply system. The boration of supply water is usually considered necessary to provide a neutron poison liquid to help maintain the reactor subcritical.

Use of boric acid solutions in nuclear reactors is taught early on, for example, by *Panson* in U.S. Patent No. 4,764,337, which states that:
the use of boric acid for preventing or at least inhibiting carbon steel corrosion in the secondary water systems of nuclear steam generators has been known for some time. In particular, boric acid has been utilized to minimize the phenomena known as denting at the tube/-tube support plate interface in nuclear steam generators...
While boric acid alone has been found to be highly useful for inhibiting carbon steel corrosion of the type which results in denting, nuclear applications require a continuous search for improved systems and increased reliabilities. Diol boric acid compounds which are more strongly acidic than boric acid alone are known....
[There appears to be a] reaction between boric acid and diol compounds to activate boric acid by producing diol boric acid complexes which have more acidic characteristics than does boric acid itself. However there is no suggestion... that such diol boric acid complexes are capable of inhibiting corrosion. And even more so there is no disclosure that diol boric acid complexes might be useful for inhibiting carbon steel corrosion in nuclear steam generator applications.

Importantly, it was later found that boric acid can be used as a moderator to suppress some neutron flux, as taught by U.S. Patent Nos. 8,233,581 and 5,171,515 (*Connor et al.* and *Panson et al.,* respectively). In another area, *Brown et al.,* in U. S. Patent No. 4,225,390 shows the level of complexity for boron control systems for nuclear power plants.

Boration supply systems currently in operation utilize a completely on-site, permanent batching tank of substantial size, requiring major auxiliaries to keep it "on-site useful," to blend the desired concentration of boric acid and water to provide an appropriate solution prior to injection into the coolant water used within the reactor coolant system of a nuclear reactor.

The major disadvantage of current boration supply systems is that they require a very large permanent batching tank with attached components including a permanent motorized agitator and a heating system for mixing and maintaining relatively high concentrations of boric acid in solution. As such, current boration supply systems are a problem in that they require a large amount of space, that is, a large footprint, and a major amount of power. These requirements do not make the current boration supply systems readily transportable or mobile, and are permanently on-site. Thus, there is a need to mimic nuclear power plant boration systems with a system that provides a smaller in-place footprint, is easily transportable, and makes more efficient use of energy and resources during periods of time when the installed plant equipment is not operable or is not ready for use.

### SUMMARY

The above problems are solved and needs supplied by providing a mobile boration apparatus providing nuclear reactor systems with borated coolant that can mix constituents on-site, to provide borated water. The mobile apparatus comprises a mobile transportation means having: a connection to a water source; an H₃ *BO*₃ powder or other water soluble boron source; a heater to heat the water; a pump or other motive force to move water to a desired location; a mixer to allow metered mixing of the water and H₃ *BO*₃ powder or other water soluble boron source to generate a preselected, metered appropriate concentration of initial water/boric acid slurry, which slurry during continued mixing provides a borated/boric acid water solution; a dilution tank; a hot stream conduit connected between the mixer and the dilution tank for conveying the relatively hot borated/boric acid water solution to the dilution tank; a dilution stream conduit connecting the dilution tank to a dilution stream compared to the relatively hot borated/boric acid water solution; and a diluted boric acid output connected to an exit port on the dilution tank for conveying a mixture of the dilution stream and the hot borated/boric acid water solution to a nuclear reactor system at a desired concentration and flow rate.

In one embodiment the heater heats the water/boric acid slurry in the mixer. Preferably the pump is selected from the group consisting of a positive displacement pump and a centrifugal pump with a flow meter and the H₃BO₃ powder source is a hopper and a screw feed conveyor. Desirably, the hopper and the screw feed conveyor can provide a controlled volume or mass flow of H₃B O₃ powder and the mixer is a mechanical mixer which can provide sufficient agitation to ensure the slurry goes into solution and air entrainment is less than 1 volume %, while the mixer is maintained at atmospheric pressure.

In another embodiment the mobile transportation system is selected from one of a truck trailer, a railcar flatbed, sea transport or air transport. Preferably, the mobile boration apparatus includes a tank containing a chemical additive for facilitating dissolution of the H₃BO₃ powder in the water.

In still another embodiment the mixer and a substantial length of the hot stream conduit is maintained in an insulated chamber and the dilution tank is situated outside the chamber. Preferably, the mobile boration apparatus includes a compressor connected to the dilution tank to supply compressed air to the upper interior of the dilution tank and, desirably, the compressor is also connected to the H₃BO₃ powder delivery system to provide an air blanket to prevent powder agglomeration caused by moisture migration to the interface between the powder source and the mixer. The mobile boration apparatus also includes a control system which is responsive to an operator input of set points to automatically control a concentration of boric acid exiting the dilution tank.

A continuous flow apparatus transportable by road, rail or sea can provide an auxiliary supply mechanism without building a massive series of structures next to the nuclear facility which would be subject to a wide variety of catastrophic events.

### BRIEF DESCRIPTION OF THE DRAWINGS

In order to better understand the invention more clearly, convenient embodiments will now be described, by way of example with reference to the accompanying drawings in which:
FIG. 1 is a block diagram of one embodiment of the of the mobile boration system of this invention;
FIG. 2 is a schematic diagram of a mobile flatbed truck transporter carrying the appropriate equipment components set out in FIG. 1, to provide a mobile boric acid solution platform which can be driven directly into the nuclear complex for delivery of the boric acid solution to one of a plurality of optional stationary water tanks, the combination of which provides a minor footprint on the nuclear plant facility;
FIG. 3 is a partial system schematic diagram of a dissolution tank and associated hot stream components of another embodiment of this invention, showing the insulated chamber boundary of this embodiment;
FIG. 4 is an expanded system view of the insulated chamber housing the dissolution tank illustrated in Figure 3, showing three such tanks and associated hot streams connected in parallel;
FIG. 5 is a full system schematic diagram of the embodiment shown in Figures 3 and 4; and
FIG 6 is a system flow diagram providing an overview of the operation of the control system that controls the process performed by the system schematically illustrated in Figure 5.

### DESCRIPTION OF THE PREFERRED EMBODIMENT

The boration supply system according to the present invention overcomes the limitations of current systems and provides a solution for eliminating and/or mitigating damages to a commercial nuclear power plant boration supply and storage system. According to one embodiment of the present invention, a mobile boration supply system is provided capable, for example, to refill the refueling water storage tank. This system must be easily stored and transportable. Because of its mobility by sea, land or air transport, the boration supply system of the present invention is capable of being centrally deployed and transportable to any nearby site that may require boration. This is a vast improvement over the design characteristics of prior art boration supply systems employed to batch boric acid in power plants. The boration supply system of the present invention is designed to use a minimum number of required pieces of equipment, one or more of which are selected for minimal size and power consumption requirements. As such, the system is ideal for mobile applications via truck, train or sea. The relative small size of the system also makes it suitable to other possible permanent applications.

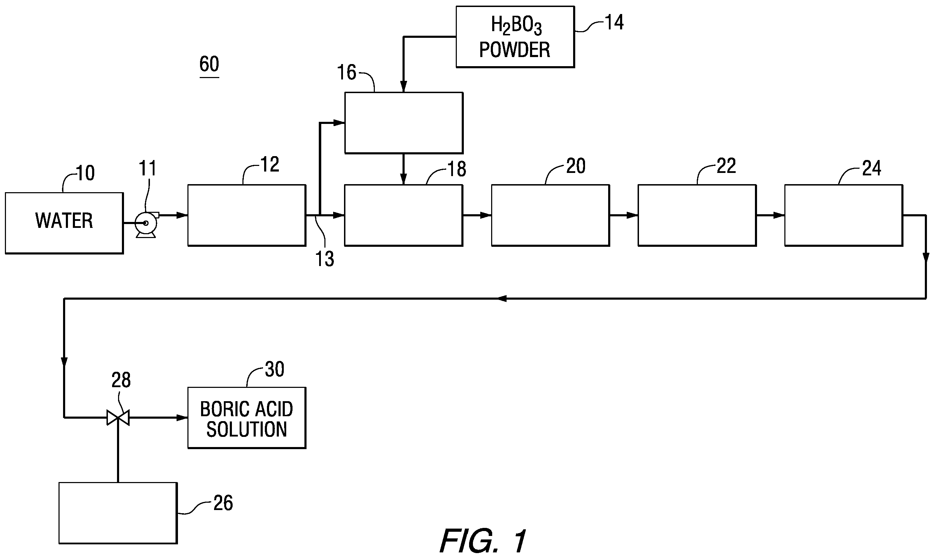

FIG. 1 illustrates a boration supply system 60 according to one embodiment of the present invention. As seen in FIG. 1, the system includes: a water pump 11, such as a positive displacement pump or centrifugal pump, with a flow control device 12 to provide a metered source of fluid 13; a slurry funnel 16 and eductor system 18 with a screw feed hopper 14 to directly handle powdered boric acid and eliminate the need for large batching tanks; and a mechanical mixing device 20 to allow sufficient time and provide sufficient mechanical agitation to ensure boric acid goes into solution. In the current embodiment, the mechanical mixing device 20 reduces the possibility of entraining air, less than 1 vol. %, in the downstream flow, which would be undesirable. The mechanical mixing device can incorporate an optional upstream orifice/valve to tune the flow distribution. A metering screw takes the H₃ *BO*₃ powder, or other source of boron that is water soluble, from the hopper and can provide a controlled volume flow with a relatively high accuracy (0.5%). The mixing device may also incorporate a "screw speed to ppm" correlation if possible. In the current embodiment, the mass flow rate of the H₃ *BO*₃ powder is about 10.5 kg/min (23 lb/min).

In the embodiments, the boration supply system 60 of the present invention incorporates a heater surrounding a dissolution tank and optionally an additive tank to provide the required solvent temperature and chemistry to facilitate driving boric acid into solution.

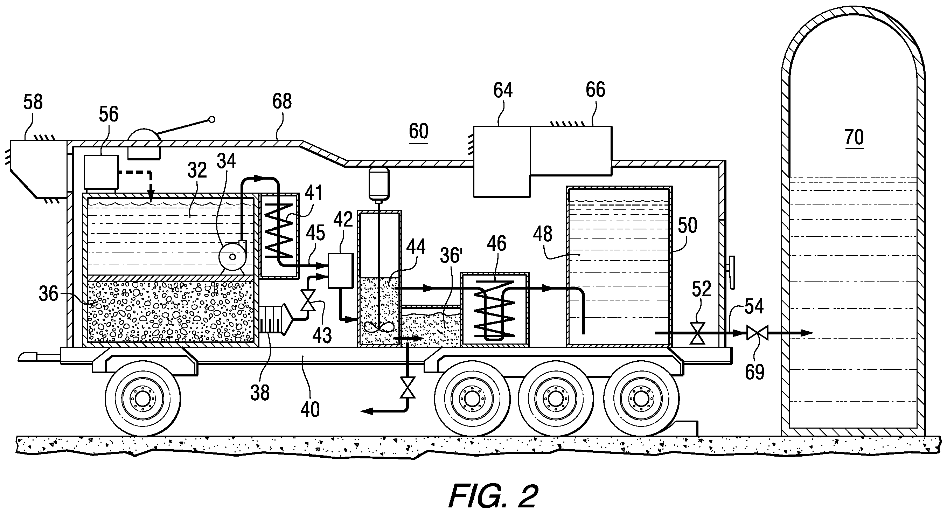

As shown in FIG. 1 (and FIG. 2), a water source 10 (32), which may be outside the boundary of the device if a local water source is available, is pumped, by optional pump 11 (34), into a heat exchanger 12 (41). The heated water 13 (45) is passed to a wash-down funnel 16 or the like 42 and metered with feed granular H₃ *BO*₃ powder 14(36) to provide an aqueous H₃ *BO*₃ slurry 36'. Pump 11 may not be needed if there is a pump near a water source, i.e., municipal water supply, river, lake, etc. This slurry 36' is fed into an eductor 18, or similar device, which draws the slurry by use of a pressure differential, plus additional heated water 13 which is mixed to provide a homogeneous slurry and further heated in mixing device 20 (44). Boron concentration is checked on detector 22 to provide a desired boron concentration solution. Flow element 24 meters flow rate of the solution. Some sludge slurry can be passed to collector 26 (36') via valve 28 and finally to optional hold-up feed tank 30 (50) for the reactor. It may be pumped directly into the nuclear system.

FIG. 2, based completely on FIG. 1, shows a possible delivery platform such as a truck flatbed, or other transportation means 40, such as a railroad car. The transport 40 can contain a water tank 32, granular powder tank/supply 36, screw powder feed 38, water pump 34, water heater 41, water metering system 42, valve 43, mixer 44, waste water slurry tank 36' and high aqueous slurry heater 46, to provide boric acid solution 48 fed into optional storage tank 50 and through valve 52 to boric acid feed 54 through valve 69. This feed 54 flows into optional minimal storage tank 70. Optional additive tank is shown as 56. Also shown is an optional heater/air conditioner unit 58, power control function system 66 and additional monitors 64 as well as a truck cover structure 68.

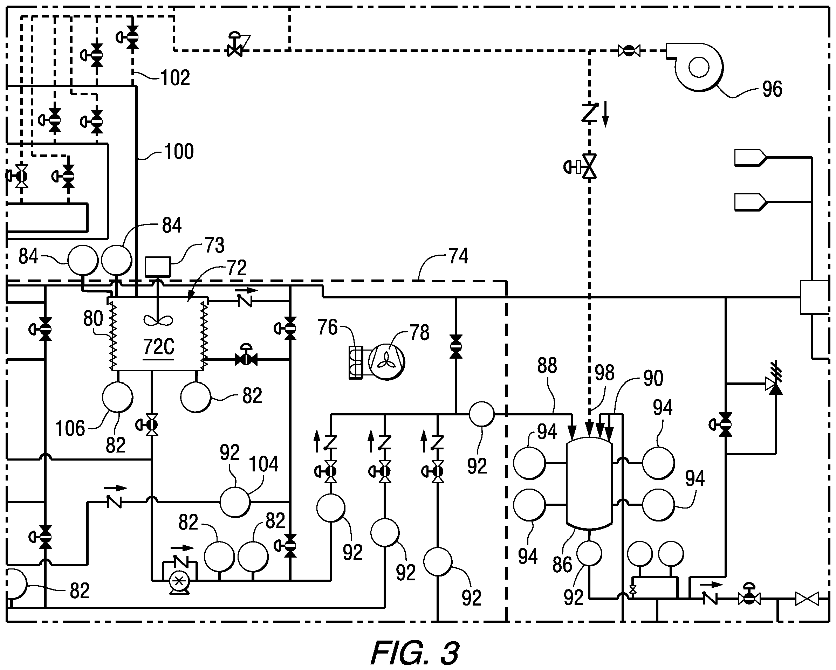

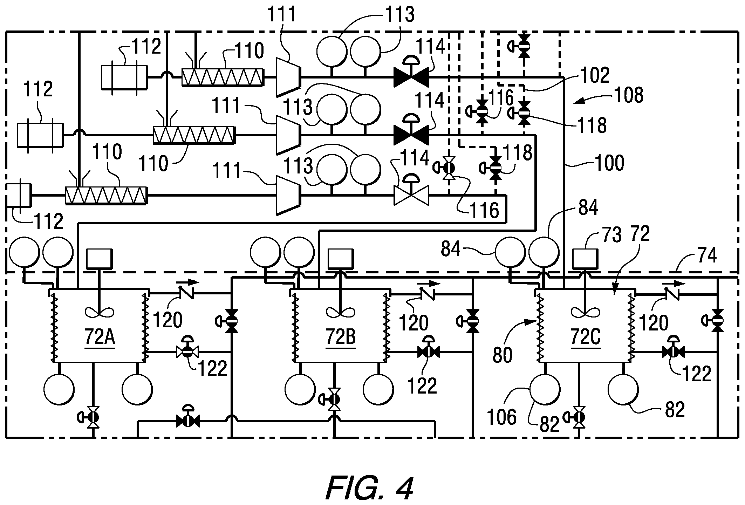

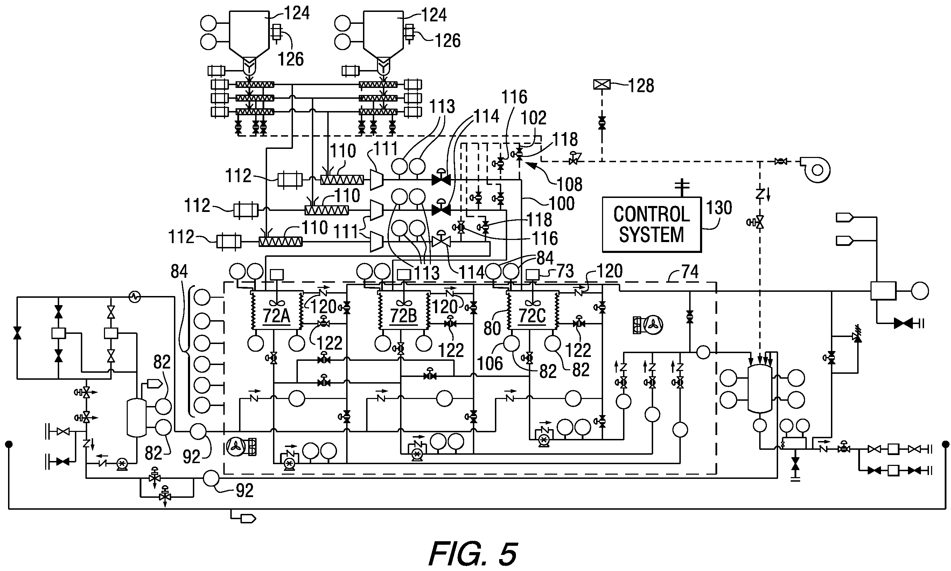

Figure 3 shows a further enhancement of a portion of the system illustrated in Figures 1 and 2. The embodiments include an insulated chamber, shown by the dashed line 74, that contains one or more dissolution tanks (previously described as the mixer 44 in regard to Figure 2) in which high temperature dissolution of boric acid power in water occurs. The dissolution tank 72 preferably has a mechanical mixer 73 that can provide sufficient agitation to ensure the slurry goes into solution and air entrainment of less than 1 volume %. The dissolution tank 72C shown in Figure 3 is part of three parallel trains shown in Figures 4 and 5, for processing powdered H₃BO₃ into boric acid having the desired concentration. Multiple trains are used to achieve the desired volume output while enabling the portability of the system and improved efficiency of the process. The dissolution tanks are surrounded by a heater 80 and monitored by pressure sensors 82 and temperature sensors 84. Because the dissolution tank 72 and associated equipment are required to be operated at a high temperature to prevent boric acid from precipitating from the contained fluid, the chamber 74 is operated at a high temperature regulated by the heater 76 and blower 78. Operating the entire insulated chamber 74 at a high temperature is advantageous because otherwise localized heating would be required at a number of points in the system with a higher probability of introducing a failure mechanism.

As mentioned in the previous paragraph, the dissolution tank 72 is where high temperature dissolution of boric acid in water occurs. Because the fluid is of a high temperature, evaporation will occur and can potentially impact the addition pathway 100 of solid powders. This embodiment incorporates an air blanket to prevent powder agglomeration caused by moisture migration to the interface between the powder handling equipment and the dissolution tank. The compressed air is supplied by the compressor 96 and enters the powder pathway 100 at the interface 102. The design of the dissolution tank incorporates a directed flow field which allows retaining an atmospheric pressure in the presence of air injection which relaxes tank structural requirements. This is accomplished through a combination of having a closed tank with a single vent line and check valve 120 which allows for an atmospheric condition while preventing powder agglomeration. Maintaining the tank at atmospheric pressure limits the tank wall thickness requirement which facilitates heat transfer from the band heaters 80 into the interior of the dissolution tanks 72.

The enhanced system illustrated in Figure 3 includes the dilution tank 86 outside of outside of the insulated chamber. The dilution tank is where two streams, one of high temperature, highly concentrated fluid, is combined with the lower temperature, dilute stream. The high temperature stream enters the dilution tank 86 at inlet 88 and the lower temperature stream enters at inlet 90. Because the direct interaction of the two streams before they enter the bulk solution in the lower portion of the dilution tank 86 would create a thermal gradient that can lower the temperature of the highly concentrated line to a point where dissolution occurs and line blockage can result. Interaction of the two streams within the bulk solution does not create precipitation problem. To avoid the direct interaction of the two streams at the inlet a pressurized air region is formed at the top of the dilution tank that is maintained by the compressor 96 through air inlet 98. This separates the two injection steams from interacting thermally when they first enter the dissolution tank 86. The compressed air also provides a motive force to discharge the tank contents through the bottom of the tank to a desired location. The design of the dilution tank includes features to preclude excess air entrainment that occurs as the streams pass through the compressed air blanket, which relaxes air compressor sizing requirements. These features include: employing a tall, thin tank to limit vertical entrainment of air out through the tank exit; employing injection nozzles for the higher flow diluted stream to further prevent air entrainment; employing a stream diversion plate to minimize air entrainment; and angling the injection nozzles at about 30° in opposite directions to further reduce vertical air entrainment. The latter arrangement will counterbalance some of the forces on the injection nozzle. It should be appreciated that not all of these features need to be employed together to reduce air entrainment.

Thus this system includes a high temperature source within the dissolution tank 72 and a dilution stream, which mix in the dilution tank 86. The concentration within the dissolution tanks, and the two flow streams to the dilution tank 88 and 90 are variable and can be optimized based on user input. Appropriate measurements such as liquid flow rate, powder flow rate and dissolution tank level provide input to the process optimization determination.

The liquid volume in the dissolution tanks 72 is indicated by a totalizer measurement on the heated flow stream 88. The totalizer measurement is provided by the flow sensors 92 designated by reference character 104 in combination with the pressure transducers 82 in the dissolution tanks 72, designated by reference character 106. The totalizer flow measurement must be corrected for the thermal conditions of the fluid as well as the quantity of powder added to the tank. The pressure transducer 106 must be corrected for the density of the solution. Once these corrections are applied the two parameters will match within the uncertainty of the measurement so long as the quantities of boric acid, lithium hydroxide and water have been added as expected. The lithium hydroxide is added to facilitate the dissolution of the H₃BO₃ powder. A programmable logic controller controls this process and includes logic to correct for density in real time. Deviations in these parameters outside of the uncertainty limits indicate a potential deviation in the target boron concentration. This process measurement is used to ensure delivery of the desired concentration of borated coolant. Based on user input of flow rate and concentration, an optimal high concentration target within the dissolution tanks 72 can be achieved to minimize the interfacing constraints such as energy usage, insulated chamber heat losses and dissolution tank pump net positive suction head margin.

Figure 4 is a schematic system diagram that shows the respective H₃BO₃ feed circuits 108 connected to their corresponding dissolution tanks 72. The tops of the dissolution tanks 72 are provided with the H₃BO₃ powder from metering screw conveyors 110 using screw conveyor motors 112 through concentric reducers 111 and powder isolation gate valves 114. Powder level indicators 113 determine the presence of powder. The concentric reducers 111 are employed to distribute any powder sheer stresses equally and aid in powder movement. Once powder is added to the dissolution tanks 72A, 72B, 72C through addition line 100, powder isolation gate valves 114 are closed and air blanket isolation valves 116 or 118 are opened to provide the air flow. Isolation valves 116 and 118 connect the air compressor 96 (shown in Figures 3 and 5, with the powder feed lines and provide an air blanket to the dissolution tanks 72. Check valve 120 is a tank overfill conduit that provides the vent path for the air blanket to maintain pressure in the dissolution tank at or near atmospheric. Valve 122 is the dissolution tank inlet valve.

Figure 5 is a combination of Figures 3 and 4 and further show the hoppers with mechanical agitation 124 that feed the powder to the screw conveyors 110, with the vibrators 126 aiding movement of the powder. Figure 5 also shows a backup air connection 128 and other auxiliary equipment.

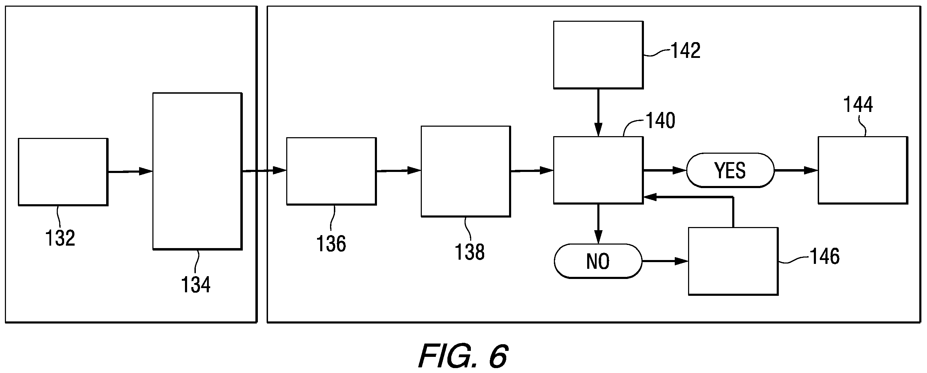

The embodiment illustrated in Figures 3, 4 and 5 also incorporates a logic controller 130 which contains control calculations and set point information based on physical phenomena and system arrangement. The logic controller receives input from a user, and manipulates the equipment to provide a desired product. Unique system logic includes: selection of the startup process based on user input, control valve position and control based on user input and skid condition; selection of an optimal dissolution tank concentration set point; control of powder injection by metering screw conveyor control; control of pump flow rate based on user input and skid condition; control of isolation valves and equipment based on process cycling; and control of dilution tank pressure based on instrument feedback. User input defines the initial control targets. For example, if it is known that a higher boron concentration discharge is required, the dilution tank concentration set point is then known and the control valve positions can be assumed. The operator can determine initial control valve positions instead of the control system to reduce the likelihood of error. The system control logic also includes the ability to determine the optimized tank concentration to relax constraints on the interfacing parameters. Figure 6 is a flow chart overview of the control system. Initial user input, e.g., flow rate, concentration, operating alignment, is entered at 132 and the initial targets, e.g., valve positions, flow rate targets, dissolution tank boric acid concentration, dissolution tank boric acid temperature, screw conveyor targets, are determined at 134. The dissolution tank then fills with powder and water. Input is then received at block 138 from the instrumentation, e.g., flow meters, pressure sensors and temperature sensors and the sensor outputs are used at block 140 to determine if the concentration in the dissolution tank is on target. To make that determination block 142 provides block 140 with boric acid and temperature density correlations (based on testing data). If the concentration is on target then the system identifies at block 144 that the solution is ready for discharge. If block 140 determines that that the concentration is not on target then block 146 makes the appropriate adjustments and the determination is repeated in block 140 until the target is reached.

The versatility of this supply means, in providing a semi-constant supply of transported borated water, is not only vastly safer but financially sounder than vulnerable on-site storage.

While the invention has been described in terms of preferred embodiment, various changes, additions and modifications may be made without departing from the steps of the invention. Having described the presently preferred embodiments, it is to be understood that the invention may be otherwise embodied within the scope of the appended claims.

## Claims

1. A mobile boration apparatus (60) capable of providing nuclear reactor systems with borated coolant that can mix components on-site, to provide borated water, the mobile boration apparatus comprising:
a) a water source (10, 32) supplying water;
b) a source for providing a boric acid powder (36) or other water soluble boron compound;
c) an insulated chamber (74), wherein the insulated chamber is at a high temperature when operating, the insulated chamber (74) comprising at least one dissolution tank (72), each surrounded by a heater (80), and arranged for metered mixing of the water and the boric acid powder (36) or the other water soluble boron compound to provide a slurry, which slurry during continued agitation dissolves to provide a hot boric acid or borated solution at a desired high concentration and at an air entrainment of less than 1 volume %;
d) a dilution tank (86), located outside of the insulated chamber, wherein the hot boric acid or borated solution and a cold dilution stream are mixed to provide a diluted boric acid or borated solution;
e) a hot stream conduit (88) connecting the dissolution tank (72) and the dilution tank (86) for conveying the hot boric acid or borated solution to the dilution tank (86);
f) a dilution stream conduit (90) connecting the cold dilution stream to the dilution tank (86) for conveying the cold dilution stream to the dilution tank (86); and
g) a diluted boric acid output (92) connected to an exit port on the dilution tank (86) for conveying diluted boric acid or borated solution to a nuclear reactor system.

2. The mobile boration apparatus (60) of claim 1, further comprising a pump (11, 34) to provide a motive source to move the water from the water source (10, 32) to a desired location, wherein the pump (11, 34) is selected from the group consisting of a positive displacement pump and a centrifugal pump with a flow meter.

3. The mobile boration apparatus (60) of a previous claim, wherein the source for providing the boric acid powder (36) comprises a hopper (124) and a screw feed conveyor (110).

4. The mobile boration apparatus (60) of a previous claim, wherein the dissolution tank (72) further comprises a mixer (73), wherein the mixer (73) is a mechanical mixer which can provide sufficient agitation to ensure the slurry goes into solution and air entrainment of less than 1 vol. %.

5. The mobile boration apparatus (60) of a previous claim, wherein the screw feed (110) of the hopper (124) can provide a controlled volume flow of the boric acid powder (36).

6. The mobile boration apparatus (60) of a previous claim, wherein the mobile boration apparatus (60) is mounted on a platform selected from a group consisting of a truck trailer, a railcar flatbed, sea transport and air transport.

7. The mobile boration apparatus (60) of a previous claim, further comprising a tank (56) containing a chemical additive, said additive facilitating dissolution of the the boric acid powder (36) in the water.

8. The mobile boration apparatus (60) of a previous claim, further comprising an environmental control system (58) for heating an inside of the insulated chamber (74).

9. The mobile boration apparatus (60) of a previous claim, further comprising a compressor (96) connected to the dilution tank (86) to supply compressed air to an upper interior of the dilution tank (86).

10. The mobile boration apparatus (60) of a previous claim, further comprising a control system (130) which is responsive to an operator input of set points to automatically control a concentration of boric acid exiting the dilution tank (86).

11. The mobile boration apparatus (60) of a previous claim, wherein the boric acid powder is delivered via a delivery system comprising a compressed air input (102) that provides an air blanket to prevent powder agglomeration caused by moisture migration to an interface between the source of the boric acid powder (124) and the dissolution tank (72).

12. The mobile boration apparatus (60) of a previous claim, wherein the dissolution tank (72) is maintained substantially at atmospheric pressure.

## Patentansprüche

1. Mobile Borierungsanlage (60), die in der Lage ist, Kernreaktorsysteme mit boriertem Kühlmittel zu versorgen, und die Komponenten vor Ort mischen kann, um boriertes Wasser bereitzustellen, wobei die mobile Borierungsanlage umfasst:
a) eine Wasserquelle (10, 32), die Wasser liefert;
b) eine Quelle zur Bereitstellung von Borsäurepulver (36) oder einer anderen wasserlöslichen Borverbindung;
c) eine isolierte Kammer (74), wobei die isolierte Kammer im Betrieb eine hohe Temperatur aufweist, wobei die isolierte Kammer (74) zumindest einen jeweils von einer Heizung (80) umgebenen Auflösetank (72) aufweist, und dazu angeordnet ist, das Wasser und das Borsäurepulver (36) oder die andere wasserlösliche Borverbindung dosiert zu mischen, um eine Aufschlämmung bereitzustellen, wobei die Aufschlämmung während des kontinuierlichen Rührens gelöst wird, um eine heiße Borsäure- oder borierte Lösung mit einer gewünschten hohen Konzentration und einem Lufteintrag von weniger als 1 Vol.-% bereitzustellen;
d) einen Verdünnungstank (86), der sich außerhalb der isolierten Kammer befindet, wobei die heiße Borsäure- oder borierte Lösung und ein kalter Verdünnungsstrom gemischt werden, um eine verdünnte Borsäure- oder borierte Lösung bereitzustellen;
e) eine Heißstromleitung (88), die den Auflösetank (72) und den Verdünnungstank (86) verbindet, um die heiße Borsäure- oder borierte Lösung zu dem Verdünnungstank (86) zu fördern;
f) eine Verdünnungsstromleitung (90), die den kalten Verdünnungsstrom mit dem Verdünnungstank (86) verbindet, um den kalten Verdünnungsstrom zu dem Verdünnungstank (86) zu fördern; und
g) einen Ausgang (92) für verdünnte Borsäure, der mit einem Auslassanschluss an dem Verdünnungstank (86) verbunden ist, um verdünnte Borsäure- oder borierte Lösung an ein Kernreaktorsystem fördern.

2. Mobile Borierungsanlage (60) nach Anspruch 1, ferner umfassend eine Pumpe (11, 34), um eine Bewegungsquelle bereitzustellen, um das Wasser von der Wasserquelle (10, 32) zu einer gewünschten Stelle zu bewegen, wobei die Pumpe (11, 34) ausgewählt ist aus der Gruppe bestehend aus einer Verdrängerpumpe und einer Zentrifugenpumpe mit einem Durchflussmesser.

3. Mobile Borierungsanlage (60) nach einem der vorhergehenden Ansprüche, wobei die Quelle zur Bereitstellung des Borsäurepulvers (36) einen Trichter (124) und einen Schneckenförderer (110) umfasst.

4. Mobile Borierungsanlage (60) nach einem der vorhergehenden Ansprüche, wobei der Auflösetank (72) ferner einen Mischer (73) umfasst, wobei der Mischer (73) ein mechanischer Mischer ist, der für ausreichendes Bewegen sorgen kann, um sicherzustellen, dass die Aufschlämmung in Lösung geht und der Lufteintrag unter 1 Vol.-% bleibt.

5. Mobile Borierungsanlage (60) nach einem der vorhergehenden Ansprüche, wobei die Schneckenförderung (110) des Trichters (124) einen gesteuerten Volumenstrom des Borsäurepulvers (36) bereitstellen kann.

6. Mobile Borierungsanlage (60) nach einem der vorhergehenden Ansprüche, wobei die mobile Borierungsanlage (60) an einer Plattform montiert ist, die ausgewählt ist aus einer Gruppe bestehend aus einem Lastwagenanhänger, einem Eisenbahntieflader, Schiffstransport und Lufttransport.

7. Mobile Borierungsanlage (60) nach einem der vorhergehenden Ansprüche, ferner umfassend einen Tank (56), der ein chemisches Additiv enthält, wobei das Additiv das Auflösen des Borsäurepulvers (36) im Wasser erleichtert.

8. Mobile Borierungsanlage (60) nach einem der vorhergehenden Ansprüche, ferner umfassend ein Umgebungssteuersystem (58) zum Beheizen einer Innenseite der isolierten Kammer (74).

9. Mobile Borierungsanlage (60) nach einem der vorhergehenden Ansprüche, ferner umfassend einen Kompressor (96), der mit dem Verdünnungstank (86) verbunden ist, um Druckluft an einen oberen Innenraum des Verdünnungstanks (86) zu liefern.

10. Mobile Borierungsanlage (60) nach einem der vorhergehenden Ansprüche, ferner umfassend ein Steuersystem (130), das auf die Bedienereingabe von Einstellpunkten anspricht, um automatisch eine Konzentration der Borsäure, die aus dem Verdünnungstank (86) austritt, zu steuern.

11. Mobile Borierungsanlage (60) nach einem der vorhergehenden Ansprüche, wobei das Borsäurepulver über ein Zuführsystem zugeführt wird, das einen Drucklufteingang (102) umfasst, der eine Luftschicht bereitstellt, um zu verhindern, dass das Pulver durch Eindringen von Feuchtigkeit in eine Schnittstelle zwischen der Quelle des Borsäurepulvers (124) und dem Auflösetank (72) agglomeriert.

12. Mobile Borierungsanlage (60) nach einem der vorhergehenden Ansprüche, wobei der Auflösetank (72) im Wesentlichen auf atmosphärischem Druck gehalten wird.

## Revendications

1. Appareil mobile de boration (60) capable de fournir des systèmes de réacteur nucléaire avec un caloporteur boré, et pouvant mélanger les composés sur site, pour fournir de l'eau boré, l'appareil mobile de boration comprenant :
a) une source d'eau (10, 32) pour fournir de l'eau ;
b) une source pour fournir une poudre d'acide borique (36) ou un autre composé de bore soluble dans l'eau ;
c) une chambre isolée (74), la chambre isolée étant à une température élevée pendant l'exploitation, la chambre isolée (74) comprenant au moins un réservoir de dissolution (72) respectivement entouré par un dispositif de chauffage (80), et arrangé pour mélanger, de manière dosée, l'eau et la poudre d'acide borique (36) ou l'autre composé de bore soluble dans l'eau pour fournir une suspension, la suspension se dissolvant pendant l'agitation continue pour obtenir une solution chaude d'acide borique ou de borate à une concentration élevée souhaitée et à un entraînement d'air inférieur à 1 % en volume ;
d) un réservoir de dilution (86) situé à l'extérieur de la chambre isolée, dans lequel la solution chaude d'acide borique ou de borate est mélangée avec un courant de dilution froid pour fournir une solution diluée d'acide borique ou de borate ;
e) un conduit de courant chaud (88) reliant le réservoir de dissolution (72) et le réservoir de dilution (86) pour transporter la solution chaude d'acide borique ou de borate vers le réservoir de dilution (86) ;
f) un conduit de courant de dilution (90) reliant le courant de dilution froid avec le réservoir de dilution (86) pour transporter le courant de dilution froid vers le réservoir de dilution (86) ; et
g) une sortie d'acide borique dilué (92) relié à un port de sortie sur le réservoir de dilution (86) pour transporter l'acide borique dilué ou la solution de borate diluée vers un système de réacteur nucléaire.

2. Appareil mobile de boration (60) selon la revendication 1, en outre comprenant une pompe (11, 34) pour procurer une source motrice pour déplacer l'eau de la source d'eau (10, 32) à un emplacement souhaité, la pompe (11, 34) étant choisie dans le groupe constitué par une pompe volumétrique et une pompe centrifuge avec débitmètre.

3. Appareil mobile de boration (60) selon l'une quelconque des revendications précédentes, dans lequel la source pour fournir la poudre d'acide borique (36) comprend une trémie (124) et un convoyeur d'alimentation à vis (110).

4. Appareil mobile de boration (60) selon l'une quelconque des revendications précédentes, dans lequel le réservoir de dissolution (72) en outre comprend un mélangeur (73), le mélangeur (73) étant un mélangeur mécanique qui peut procurer une agitation suffisante pour veiller que la suspension entre en solution et l'entraînement d'air est maintenu en dessous de 1 % en volume.

5. Appareil mobile de boration (60) selon l'une quelconque des revendications précédentes, dans lequel l'alimentation à vis (110) de la trémie (124) peut fournir un courant volumique contrôlé de poudre d'acide borique (36).

6. Appareil mobile de boration (60) selon l'une quelconque des revendications précédentes, l'appareil mobile de boration (60) étant monté sur une plateforme choisie dans le groupe constitué d'une remorque de camion, d'un wagon de chemin de fer à plate-forme, du transport maritime et du transport aérien.

7. Appareil mobile de boration (60) selon l'une quelconque des revendications précédentes, en outre comprenant un réservoir (56) contenant un additif chimique, l'additif facilitant la dissolution de la poudre d'acide borique (36) dans l'eau.

8. Appareil mobile de boration (60) selon l'une quelconque des revendications précédentes, en outre comprenant un système de commande de l'environnement (58) pour chauffer un intérieur de la chambre isolée (74).

9. Appareil mobile de boration (60) selon l'une quelconque des revendications précédentes, en outre comprenant un compresseur (96) relié au réservoir de dilution (86) pour alimenter une portion supérieure de l'intérieur du réservoir de dilution (86) avec de l'air comprimé.

10. Appareil mobile de boration (60) selon l'une quelconque des revendications précédentes, en outre comprenant un système de commande (130) qui est responsif à une entrée des points de consigne par un opérateur, pour commander de manière automatique une concentration de l'acide borique sortant le réservoir de dilution (86).

11. Appareil mobile de boration (60) selon l'une quelconque des revendications précédentes, dans lequel la poudre d'acide borique est fournie par un système d'alimentation comprenant une entrée d'air comprimé (102) fournissant une couche d'air pour empêcher l'agglomération de poudre causée par la migration d'humidité vers une interface entre la source de la poudre d'acide borique (124) et le réservoir de dissolution (72).

12. Appareil mobile de boration (60) selon l'une quelconque des revendications précédentes, dans lequel le réservoir de dissolution (72) est maintenu sensiblement à la pression atmosphérique.
